# EUROPEAN PATENT APPLICATION

(11) **EP 2 876 079 A1**
(43) Date of publication of application: **27.05.2015**
(21) Application number: 13194434.0
(22) Date of filing: 26.11.2013
(51) Int. Cl.: C01B 3/38

(54) **Prereformer Bypass**

(71) Applicant: HALDOR TOPSOE A/S, 2800 Kgs. Lyngby (DK)
(72) Inventor: Andersen, Niels Ulrik, 2820 Gentofte (DK); Janardhanan, Madhanakrishnan, Harrow, HA2 8FD (GB)
(74) Representative: Haldor Topsøe A/S

(57) **Abstract**

A plant and a process for improved reforming of fluids comprising hydrocarbons. Said production process comprising the steps of: at a first steam mixing point adding a first amount of steam to a process stream obtaining a "first stream mix" and supplying the first stream mix to a prereformer. At a second steam mixing point adding a second amount of steam to the effluent of the prereformer thereby obtaining a "second stream mix" followed by one or more subsequent reforming step.

## Description

The present invention relates to a plant and a process for improved reforming of fluids comprising hydrocarbons.

### Background

Feedstock in form of natural gas or other hydrocarbon containing fluids are used as starting point in the production of various end products such as ammonia, hydrogen, and methanol as well as more complex products.

Generally the feedstock, such as natural gas can be reformed by catalytic processes in the presence of steam ("process steam") and/or carbon dioxide in one or more reformers into a fluid containing substances such as carbon monoxide, hydrogen, water, methane and/or carbon dioxide also known as synthesis gas or syngas. The syngas may be used in the further production of various end products depending on its composition.

In synthesis plants it is often necessary to prevent carbon formation in the reformers. Adiabatic prereforming can be a way to avoid carbon formation when a downstream reformer or reformers are operated at severe conditions. Furthermore a prereformer can facilitate an increased heat recovery from the sensible heat of flue gas and/or reformed process gas from the reformer(s). However, in some cases it will be beneficial that sensible heat in flue gas and/or reformed process gas is used for other purposes e.g. for steam generation to be used in steam turbine drives in Urea plant in relation to ammonia plants.

### Aspects

In a first aspect of the present invention a system is provided which facilitates a system which is more cost effective.

In a second aspect of the present invention a plant is provided allowing operation of reformer(s) at more severe conditions, mainly in terms of heat flux, reducing the overall cost.

In a third aspect of the present invention a system is provided which allows feasible utilization of prereformers typically not used in Ammonia plants using natural gas as feedstock.

In a fourth aspect of the present invention a system is provided which overcomes issues relating to heat integration requirements.

### Summary

These and further advantages are provided by a plant comprising:
- a prereformer comprising an inlet and an outlet,
- a reformer comprising an inlet and an outlet,
- a first steam mixing point for adding a first amount of steam to a process stream and a second steam mixing point for adding a second amount of steam to the process stream,
- piping supplying a process stream to the prereformer and providing fluid communication between the outlet from the prereformer and the inlet of the reformer, and
wherein the first steam mixing point is located upstream the prereformer, and the second steam mixing point is located between the prereformer and the reformer as this allows part of the steam to be added to the process feed after it has passed the prereformer.

When part of the steam this way is bypassing the prereformer the requirements to the prereformer and its working parts, such as catalyst, are changed with respect to the case where all steam needed later on in the reforming process is added before the process stream enters the prereformer. This way it is possible to provide a plant which has several advantages over traditional plant setups. One immediate advantage being that the cost - both economically and from an energy point of view - is decreased as less catalyst is needed in the prereformer without a reduction in performance e.g. with respect to converting higher hydrocarbons allowing operation of the reformer(s) at more severe conditions.

As implied above "cost" in the context of the present application may relate not only to direct economic costs but also to energy consumption and consumption of other factors such as use of materials etc.

The process stream may comprise a number of different fluids including various hydrocarbons. In many embodiments the process stream is a natural gas but may even be heavy naphtha.

The plant comprising the prereformer and reformer may further comprise desulphurization units, other types of reformers, water gas shift units, CO₂ removal unit, methanation, synthesis gas purification (e.g. Pressure Swing Adsorption Unit), ammonia synthesis loop, and/or methanol synthesis loop. The plant may be for example be for producing synthesis gas, e.g. a plant for ammonia production which may further include or be related to units for Urea production or a Methanol Plant which may further include a methanol distillation section.

The plant comprises a single prereformer in several and often preferred embodiments.

The plant may comprise a first heat exchanger preheating the process stream to the prereformer. In this case the piping can lead the process stream to the first heat exchanger and from there to the prereformer.

Also or alternatively the plant may comprise a second heat exchanger preheating the process stream to the reformer in which case piping may lead the effluent from the prereformer to the second heat exchanger and from here to the reformer.

Depending on the overall setup of the plant and the intended process the amount of steam may be varied. In some embodiments the plant is arranged to allow approximately 30% of the process steam to be added at the first steam mixing point and/or the remaining part of the process steam to be added at the second steam mixing point.

The plant can be arranged to allow a specific part of the process steam or range of parts to be added to the process stream at the first and/or second mixing point by ensuring that piping, valves, prereformer and/or reformer(s) etc. are dimensioned to allow the specific value of first amount of steam/second amount of steam without causing disadvantageous flows in the system. In some embodiments 20-75% of the process steam such as 25 - 50%, is added at the first steam mixing point. In some advantageous embodiments 25 - 35% of the steam is added at the first steam mixing point. In some embodiments the first amount of steam is fixed. In other embodiments the first amount of steam may be varied for example by flow control means such as valves etc. For example the amount of steam added at the first mixing point may be varied between 20 - 60% depending on e.g. the desired S/C ratio, composition of the process stream and/or temperature in the prereformer. It is also possible that the amount of steam added at the first mixing point is kept constant or constant within an interval such as 20, 30, 45, 60% +- e.g. 10 or 15% hereof.

In many embodiments of the present invention the first amount of steam to the prereformer can be adjusted in order to achieve a steam-to-carbon ratio (S/C) between 0.4-2.0, preferably in the range 0.8-1.2, in order to optimize the ratio between prereformer cost and reformer cost. The first amount of process steam may also be optimized in order to maximize the efficiency of the utilization of waste heat from flue gas and/or process gas from the reformer(s). This is possible by installation of the correct amount of prereforming catalyst ensuring a conversion close to reactions' equilibrium. For the present invention the total GHSV may be in the range 2,000-20,000 Nm³/h/ m³ such as 5,000 - 15,000 Nm³/h/ m³. The pressure is in the range 6-60 bar such as 20 - 50 bar. In some embodiments the pressure can preferably be 25-40 bar

In many embodiments of the present invention the inlet temperature to the prereformer can be adjusted, optionally by further preheating the inlet stream to the prereformer in a heat exchanger. The prereformer inlet temperature can be adjusted in the range 300-600°C, preferably 400-550°C, in order to optimize the ratio between prereformer cost and reformer cost. The inlet temperature of the prereformer may also be optimized in order to maximize the efficiency of the utilization of waste heat from flue gas and/or process gas from the reformer(s).

The present invention provides a method to ensure that the prereformer can be operated with low consumption of sensible heat from flue gas and/or synthesis gas and at the same time reduce the size and cost of both the prereformer and the downstream reformer(s).

By installation of the prereformer, it can be ensured that the process feed entering the reformer has a desired composition e.g. that the content of higher hydrocarbons and sulfur compounds are minimized.

By controlling the first amount of process steam added at the first steam mixing point it is also possible to obtain a desired S/C value in the prereformer inlet.

By operation the prereformer at a low S/C ratio, i.e. 0.3-2.0, preferably 0.8-1.2, the volumetric flow through the prereformer is reduced, the diameter of the prereformer may be reduced for unchanged pressure drop, resulting in a lower apparatus cost. Depending on the specific conditions such as the composition of the process stream the S/C may be even lower. A prereformer may be arranged to work in a certain S/C interval for example 0.4, 1 or 1.5 +- 10% or +- 20% in order to cope with variations in process stream composition etc.

Similarly, the addition of the second amount of steam at the second steam mixing point may be used to obtain a global S/C value of 0.6-4.5 depending on the plant. I.e. for some plants relatively low S/C values around 1, for other plants a S/C value in the range of 2 may be preferred while others can optimally be operated with a S/C value around 3 or 4. For example, but not limited to, S/C values may be selected as: 2.5-4.0 for ammonia plants, 1.2 - 2.5 for methanol plants, 1.5-3.0 for hydrogen and Methanol plants, and 0.6-2.5 for syngas plants. The global S/C ratio is the total amount of process steam, i.e. the total of first and second amount of process steam in relation to the total carbon flow from hydrocarbons in the feed process stream. By adding the second amount of process steam, obtaining the aforesaid global S/C values the optimum synthesis gas composition from the reformer(s) is obtained.

Preferably the reformer is a tubular reformer which may be a side-fired furnace concept which provides accurate temperature control and thereby ensures long life time of the reformer tubes and optimum use of tube materials.

The reformer can be one of several types and advantageous embodiments can be achieved as the average heat flux in the tubular reformer can be significantly increased. By applying the prereformer the heat flux in the reformer can be increased by upto 30% compared to a tubular reformer without prereformer. Typically, the average heat flux in a side-fired tubular reformer can be increased from 40,000-90,000 kcal/h/m² to 60,000-120,000 kcal/h/m². In several embodiments the prereformer is an adiabatic reformer. In the prereformer higher hydrocarbons can be converted into a mixture including at least one or more of carbon monoxide, carbon dioxide, hydrogen, water, and methane.

In the prereformer and reformer various catalysts may be used depending on the given working conditions and intended use of the plant. A reforming unit according to any of the preceding claims, wherein the prereformer catalyst may be Topsøe AR-401 or Topsøe RKNGR and/or the reformer catalyst is Topsøe R67R-7H/R67-7H.

As described above, according to the present invention is provided a plant which allows highly controlled process parameters which together results in an optimal product as well as reduced cost. The combination of a prereformer and a first and second steam mixing point enables the first stream mix to the prereformer to be optimized with respect to the specific content of the process feed, prereformer, reformer and/or desired product. Furthermore the specified temperatures of the prereformer make the prereformer applicable in e.g. ammonia plants where the sensible heat from the flue gas and/or the reformed process gas efficiently can be used for desired steam production to be used in connection with the downstream Urea Plant.

By the present invention is provided a plant which facilitates a system which is more cost effective due to a reduction of the volumetric flow through the prereformer, but still having the benefit of conversion of higher hydrocarbons, allowing operation of the downstream reformer(s) at more severe conditions, mainly in terms of heat flux, reducing the overall cost.

Thus, the present invention provides cost efficient prereformer solution to plants where energy and/or economic requirements traditionally will not make a prereformer solution feasible.

The present invention further relates to a synthesis gas production process comprising the steps of:
- at a first steam mixing point adding a first amount of up to 80% of the total added steam to a process stream thereby obtaining a "first stream mix",
- supplying the first stream mix to a prereformer,
- at a second steam mixing point downstream to the first mixing point adding a second amount of steam to the effluent of the prereformer obtaining a "second stream mix", thereby allowing a part of the total steam added to bypass the prereformer.

If the first amount of steam is equal to or smaller than the second amount of steam, such as the first amount of steam is up to 50% or preferably in the range of 20% - 40%, such as approximately 30% of the total steam added at the steam added at the first and second steam mixing point the majority of the steam is allowed to bypass the prereformer. When a part of the steam is allowed to bypass the prereformer it is possible to adjust the S/C value in the prereformer to be different from the global S/C value. Furthermore the bypass means that the volume of the prereformer can be reduced with respect to the situation wherein all steam is added before the prereformer.

In several embodiments the process also comprises a step of heating the process stream or first stream mix to a first temperature T₁ before entering the prereformer thereby enabling the optimization of the reaction temperature in the prereformer. The process may also comprise the step of heating the second steam mix before entering the reformer. Preferably the method is carried out on a plant as described herein and the advantages and arguments provided for the plant features may be applied to the related process steps.

### Detailed description

In the following section the invention will be described further with reference to the provided drawings. The drawings are exemplary and are intended to illustrate aspects of the present invention. However, the drawings and the associated description are not to be construed as limiting to the present invention.

Fig. 1 shows the reforming unit, and

Fig. 2 shows Exemplary ammonia production plant.

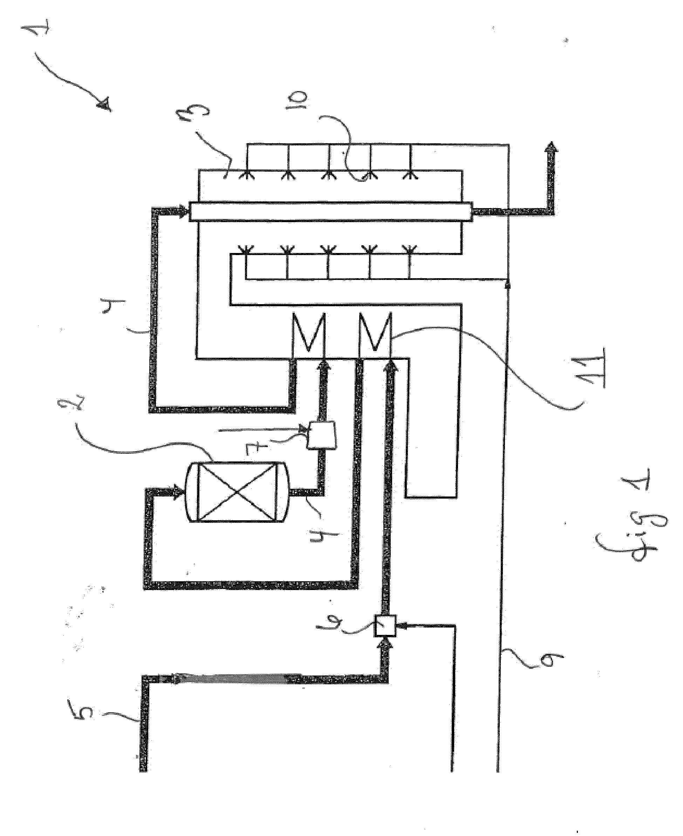

Fig. 1 shows the reforming unit 1 in a synthesis gas plant according to the present invention comprising a prereformer 2 and a reformer 3 connected by piping 4. The piping 5 supplies process steam to the prereformer 2. First steam mixing point 6 is situated in connection with tubing 5 upstream from the prereformer allowing addition of steam to the process stream before it enters the prereformer. The second steam mixing 7 point is situated in relation to tubing 4 allowing steam addition to the effluent from the prereformer. The present exemplary plant also comprises fuel supply 9 for burners 10 for heating the tubular reformer 3. The process will be described in detail with reference to the drawings in the below.

The shown unit is typically a part of a larger plant (not shown) for example for producing ammonia or methanol from natural gas.

The plant also comprises a number of heat exchangers 11 for heating the process stream/mix of process stream and steam before and/or after the prereformer.

In connection with steam reforming units the hydrocarbon feed (e.g. natural gas) can optionally be pretreated for example by removal of sulfur gasses (desulphurization) where after the hydrocarbon stream (process stream) 5 according to the present invention is mixed with a first portion of steam (process steam) at the first mixing point 6 and led to a prereformer 2. In the prereformer hydrocarbons are converted into a mixture comprising carbon oxides, hydrogen, water, and methane preferably by an adiabatic process carried out in a fixed-bed adiabatic reactor. According to the present process and unit steam is added upstream and downstream from the prereformer by a first 6 and second steam 7 mixing point respectively thereby providing a way to adjust the global S/C ratio for the reforming unit 1 as well as the S/C ratio in the prereformer 2.

From the prereformer 2 the process stream (now prereformer effluent) is led to downstream processes including reactions in at least one reformer 3. In these one or more reformers reforming, water-gas shift, and/or optionally partial oxidation reactions are carried out in order to provide a reformer unit effluent gas (syngas) with a specified composition. The composition of the syngas may depend on the intended later use. If the syngas is used in ammonia production the syngas preferably comprises 50-70 vol-% (dry) H₂, 20-30 vol-% (dry) N₂, 10-20 vol-% (dry) CO, Balance: CO₂ and Ar.

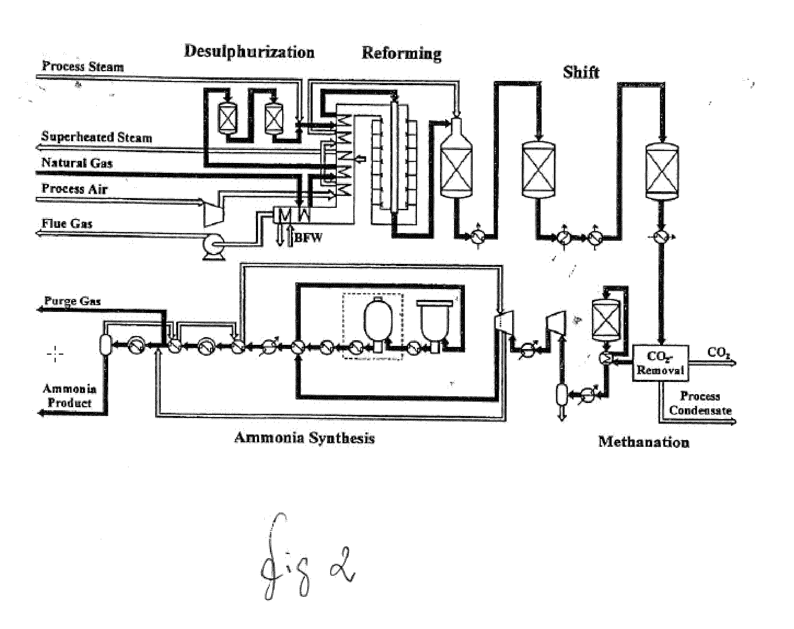

The present reforming unit and process can be incorporated in relation to a production plant such as an ammonia, methanol, hydrogen, and/or synthesis gas plant for production of more complex compounds. An example is an ammonia plant according to Fig. 2 wherein the present method and unit thus relates to a subpart comprising the claimed and described steps and parts (prereformer and second steam mixing point not shown). The ammonia product produced in the plant of Fig. 2 can be used in a related Urea production if desired. When urea is produced in relation to the plant of Fig. 2 it is desired to have sufficient steam/electricity as possible from the syngas process left for the urea plant which by conventional plants and processes may be in contradiction with the prereforming step. However the present invention provides a plant and process which enables the use of prereformer even in ammonia plants in relation to urea production.

### Example

In the below table are three different configurations of a reforming unit in an ammonia plant shown.

The "base case" is a conventional configuration without prereformer. Typically, in this configuration the steam generation matches the requirement for steam turbine drives in an adjacent Urea Plant.

"Case 1" represents an ammonia plant with prereformer, where all process steam passes through the prereformer, and the reformer feed is preheated to the same temperature as in the "base case". As part of the endothermic reforming reaction has taken place, the duty of the tubular reformer is reduced. Furthermore all higher hydrocarbons are converted, and the heat flux in the tubular reformer can be increased without formation of carbon. As a secondary effect the steam generation in the ammonia plant is also reduced as a result as an increased efficiency of the combination of the prereformer, reformer preheat, and tubular reformer.

"Case 2" represents an example of the present invention. Only 34.5 % of the process steam is added upstream the prereformer, whereas the remaining process steam is added between the prereformer and the tubular reformer. Furthermore the prereformer inlet temperature is reduced to 430°C. By doing this, the steam generation is kept above the base case, and at the same time the benefit of conversion of higher hydrocarbons allowing a reduction of the tubular reformer size. Furthermore, the size of the prereformer is also reduced compared to "Case 1" as the volumetric flow is significantly reduced.

The "case 2" has the benefit that the steam generation is higher than the "base case", which is often desirable as the steam generation in the ammonia plant is more efficient than in a traditional auxiliary boiler, and at the same time the benefits of the prereformer is utilized, resulting in a lower cost of the reforming unit.

| **Case** | | **Base case** **No prereformer** | **Case 1** **Prereformer** **All steam to prereformer** | **Case 2** **Prereformer** **Subsequential steam addition** |
|---|---|---|---|---|
| | | | | |
| Plant capacity | MTPD | 2,100 | 2,100 | 2,100 |
| Global steam to carbon ratio | | 2.9 | 2.9 | 2.9 |
| Prereformer | | No | Yes | Yes |
| Reformer inlet temperature | °C | Base | Base | Base |
| Flue gas temperature (top) | °C | 1,045 | 1,070 | 1,070 |
| Steam generation | tons/h | 369 | 361 | 375 |

| **Reformer** | | | | |
|---|---|---|---|---|
| Furnace type | | Side-fired Duplex | Side-fired Duplex | Side-fired Duplex |
| Number of tubes | | 230 | 216 | 232 |
| Tube ID/OD | mm | 132/152 | 116/136 | 116/136 |
| Average heat flux | Mcal/m² /h | 83 | 94 | 91 |
| Catalyst volume | m³ | 41 | 30 | 32 |
| Burners | | 600 | 560 | 576 |

| **Prereformer** | | | | |
|---|---|---|---|---|
| Steam to carbon ratio (inlet prereformer) | | | 2.9 | 1 |
| Inlet temperature | °C | | 490 | 430 |
| Outlet temperature | °C | | 442 | 421 |
| Catalyst volume | m³ | | 15.3 | 12.0 |

## Claims

1. A reforming unit comprising:
- a prereformer comprising an inlet and an outlet,
- a reformer comprising an inlet and an outlet,
- a first steam mixing point for adding steam to a process stream,
- a second steam mixing point for adding steam to the process stream,
- piping supplying a process stream to the prereformer and providing fluid communication between the outlet from the prereformer and the inlet of the reformer, and
wherein, the first steam mixing point is located upstream from the prereformer and the second steam mixing point is located between the prereformer and the reformer.

2. A reforming unit according to claim 1 wherein the system is arranged to allow approximately 30% of the steam to be added at the first steam mixing point and/or the remaining part of the steam is added at the second steam mixing point.

3. A reforming unit according to any of the preceding claims, wherein the system is arranged to obtain a S/C value in the prereformer inlet between 0,3 - 2, preferably between 0,8 and 1.

4. A reforming unit according to any of the preceding claims, wherein the system is arranged to obtain a global S/C value between 0,6 - 4,5 such as 2,5 - 4,0 1,5 - 3,0 and/or 0,6 - 2,5.

5. A reforming unit according to any of the preceding claims, wherein the prereformer inlet temperature is 300 - 600°C, preferably 400 - 550°C.

6. A reforming unit according to any of the preceding claims, wherein the reformer is a tubular reformer.

7. A reforming unit according to any of the preceding claims, wherein the reformer is a side-fired tubular reformer.

8. A reforming unit according to any of the preceding claims, wherein the prereformer is an adiabatic prereformer.

9. A reforming unit according to any of the preceding claims, wherein the prereformer catalyst is Topsøe AR-401 or Topsøe RKNGR and/or the reformer catalyst is Topsøe R67R-7H/R67-7H.

10. Production process comprising the steps of:
- at a first steam mixing point adding a first amount of steam to a process stream obtaining a "first stream mix",
- supplying the first stream mix to a prereformer,
- at a second steam mixing point adding a second amount of steam to the effluent of the prereformer thereby obtaining a "second stream mix",
- one or more subsequent reforming steps.

11. The process according to claim 10 wherein the first amount of steam is 80% or less than the total added amount of steam.

12. The process according to claim 10 or 11 wherein the first amount of steam is equal to or less than the second amount of steam, such as the first amount of steam is 50%, 40%, 33%, 30 or 20% of the total steam added at the steam added at the first and second steam mixing point.

13. The process according to any of claims 10 -12 wherein the S/C ratio in the prereformer is between 0.4 - 2.0, preferably between 0.8 and 1.2, and where the global S/C ratio is between 0.6 - 4.5 such as 2.5 - 4.0, 1.2 - 2.5, 1.5 - 3.0 and/or 0.6 - 2.5.

14. The process according to any of claims 10 - 13 wherein the temperature of the steam mix and/or process stream is adjusted to a specified temperature to ensure a prereformer inlet temperature between 300-600°C such as 350 - 550°C, 400 - 500°C and/or 400 - 550°C.

15. The process according to any of claims 10 - 14 wherein the method is carried out on the system according to claim 1 - 9.
